# DEMANDE DE BREVET EUROPEEN

(11) **EP 3 156 118 A1**
(43) Date de publication de la demande: **19.04.2017**
(21) Numéro de dépôt: 16193528.3
(22) Date de dépôt: 12.10.2016
(51) Int. Cl.: B01D 53/50, B01D 53/80

(54) **INSTALLATION ET PROCÉDÉ D'ÉPURATION DES GAZ D'ÉCHAPPEMENT D'UN MOTEUR D'UN NAVIRE MARIN**

(30) Priorité: 13.10.2015 FR 1559715
(71) Demandeur: LAB SA, 69007 Lyon (FR)
(72) Inventeur: SIRET, Bernard, 69200 Venissieux (FR); TABARIES, Frank, 83430 Saint Mandrier Sur Mer (FR)
(74) Mandataire: Lavoix

(57) **Abrégé**

Cette installation comprend un laveur de désulfuration (100), à l'intérieur duquel des gaz à épurer (1) sont envoyés et qui est pourvu d'éléments (101) de dispersion d'un liquide (2) de lavage de ces gaz, qui sont adaptés pour répandre le liquide de lavage à l'intérieur du laveur ; un bac (102) de collecte des effluents (4) du laveur ; et des moyens d'alimentation des éléments de dispersion en liquide de lavage. Ces moyens d'alimentation comprennent une canalisation (200) de circulation du liquide de lavage, dont la sortie est raccordée aux éléments de dispersion, dont l'entrée est reliée à une arrivée d'eau (7) et/ou au bac de collecte, et qui est pourvue d'une pompe (201) d'entrainement du liquide de lavage vers les éléments de dispersion. Les moyens d'alimentation comprennent également un système (300) d'ajout de lait de magnésie (9) au liquide de lavage (2), qui inclut une source de lait de magnésie (301) et qui est adapté pour introduire le lait de magnésie provenant de cette source dans la canalisation en un point d'introduction (303) situé entre l'entrée et la sortie de la canalisation. Selon l'invention, la canalisation est conçue pour que le temps de passage du lait de magnésie depuis le point d'introduction jusqu'aux éléments de dispersion soit compris entre 0,5 et 20 secondes.

## Description

La présente invention concerne une installation et un procédé d'épuration des gaz d'échappement d'un moteur d'un navire marin.

Les navires marins, que ce soient des paquebots ou d'autres navires, utilisent surtout du fioul comme carburant pour les moteurs diesels assurant leur propulsion. Ce fioul contient jusqu'à 5% en masse de soufre, le plus souvent entre 0,5 et 3,5% en masse. Lors du processus de combustion dans les moteurs, ce soufre est transformé en dioxyde de soufre (SO₂). Par conséquent, les gaz d'échappement de ces moteurs sont acides et doivent être épurés avant d'être rejetés à l'atmosphère.

La technologie la plus couramment proposée consiste à utiliser de l'eau de mer pour laver les gaz à épurer, le plus souvent en boucle ouverte : de par son alcalinité, l'eau de mer capture le dioxyde de soufre dans un laveur à l'intérieur duquel, à la fois, les gaz à épurer sont envoyés et l'eau de mer est répandue.

Dans certaines situations, par exemple lorsque le navire est dans un port ou bien lorsque l'alcalinité naturelle de l'eau de mer n'est pas suffisante, ce qui est typiquement le cas lorsque le navire navigue ou mouille dans de l'eau douce, on doit ajouter un surcroît d'alcalinité par un réactif basique. Il est classiquement proposé d'ajouter de la soude (NaOH). Cependant, l'utilisation de soude pose des problèmes de sécurité. De plus, le pH extrême des solutions de soude utilisées, même diluées, favorise une absorption trop rapide du dioxyde de soufre, induisant des risques de formation de précipités, tels que des sulfates de calcium, contenus dans l'eau de mer, et des sulfates de sodium, ces précipitations encroûtant le laveur et/ou bouchant les éléments de ce laveur prévus pour répandre le liquide de lavage. De surcroît, le profil de pH généré à l'intérieur du laveur, qui a une valeur trop élevée en tête du laveur, chute trop vite en descendant dans le laveur, ce qui nuit à l'efficacité du lavage des gaz.

US 2014/0060323, qui peut être considéré comme l'état de la technique le plus proche de l'invention, envisage d'utiliser indifféremment de la soude (NaOH), comme évoqué ci-dessus, mais également d'autres réactifs basiques qui sont le bicarbonate de sodium (NaHCO₃), le carbonate de sodium (Na₂CO₃), la chaux (Ca(OH)₂), le carbonate de calcium (CaCO₃), la magnésie (MgO), le carbonate de magnésium (MgCO₃) et le lait de magnésie (Mg(OH)₂). Quel que soit le réactif basique employé, ce dernier est mélangé à de l'eau de mer envoyée à l'intérieur du laveur, le mélange étant indifféremment prévu en tête du laveur, dans un garnissage interne du laveur ou dans un bac de collecte du laveur. Dans tous les cas, le mélange ainsi réalisé est immédiatement dans le laveur : l'enseignement de US 2014/0060323 est ainsi basé sur l'idée d'augmenter le pH dans le laveur de manière substantielle et instantanée, de sorte que l'installation et le procédé correspondants sont, en pratique, plutôt conçus pour être opérés avec le réactif basique le plus fort et le plus soluble, c'est-à-dire la soude.

Le but de la présente invention est de proposer une installation et un procédé d'épuration de gaz par lavage à l'eau, qui, tout en restant économiques, soient plus efficaces et moins contraignants à mettre en oeuvre.

A cet effet, l'invention a pour objet une installation d'épuration des gaz d'échappement d'un moteur d'un navire marin, telle que définie à la revendication 1.

L'invention a également pour objet un procédé d'épuration des gaz d'échappement d'un moteur d'un navire marin, tel que défini à la revendication 6.

Une des idées à la base de l'invention est de recourir, en tant que réactif basique à ajouter au liquide de lavage répandu dans le laveur de désulfuration des gaz d'échappement, à du lait de magnésie, autrement dit une suspension de magnésie dans l'eau. En prévoyant, conformément à l'invention, à la fois que ce lait de magnésie est ajouté dans le liquide de lavage directement dans la canalisation de circulation du liquide de lavage, donc en aval du bac de collecte des effluents du laveur et en amont des éléments de dispersion du liquide de lavage à l'intérieur du laveur, et que le temps mis par le lait de magnésie pour passer de son point d'introduction dans la canalisation jusqu'aux éléments de dispersion soit maîtrisé en tenant compte de la cinétique de dissolution de la magnésie dans l'eau de mer, en l'occurrence que ce temps soit compris entre 0,5 et 20 secondes, plusieurs avantages sont assurés :
- le réactif basique est mieux utilisé, sans pertes dues à l'oxydation dans le bac de collecte ou bien liées aux purges de déconcentration du laveur faites par ce bac ;
- le pH induit par la magnésie est bien plus faible que celui induit par de la chaux ou de la soude, ce qui réduit nettement les risques de précipitation de sels, par exemple de carbonates et sulfates de calcium et/ou de sulfites de sodium, tant au niveau des éléments de dispersion du liquide de lavage, situés généralement en tête du laveur, qu'à l'intérieur du laveur en aval de ces éléments de dispersion ; et
- du fait que la magnésie se dissout lentement, notamment comparativement à la chaux ou à la soude, le profil de pH dans le laveur chute plus lentement, cette dissolution graduelle de la magnésie assurant qu'une zone de pH favorable à la captation du dioxyde de soufre et à l'oxydation des sulfites se maintienne plus longtemps, ce qui accroît l'efficacité du lavage des gaz d'échappement.

Ainsi, l'installation et le procédé conformes à l'invention sont particulièrement efficaces, tout en étant aisés et économiques à mettre en oeuvre.

Des caractéristiques additionnelles avantageuses de l'installation et du procédé conformes à l'invention sont spécifiées aux revendications dépendantes.

L'invention sera mieux comprise à la lecture de la description qui va suivre, donnée uniquement à titre d'exemple et faite en se référant aux dessins sur lesquels :
- la figure 1 est un schéma d'une installation conforme à l'invention, et
- la figure 2 est un graphe montrant une variation de pH en fonction du temps.

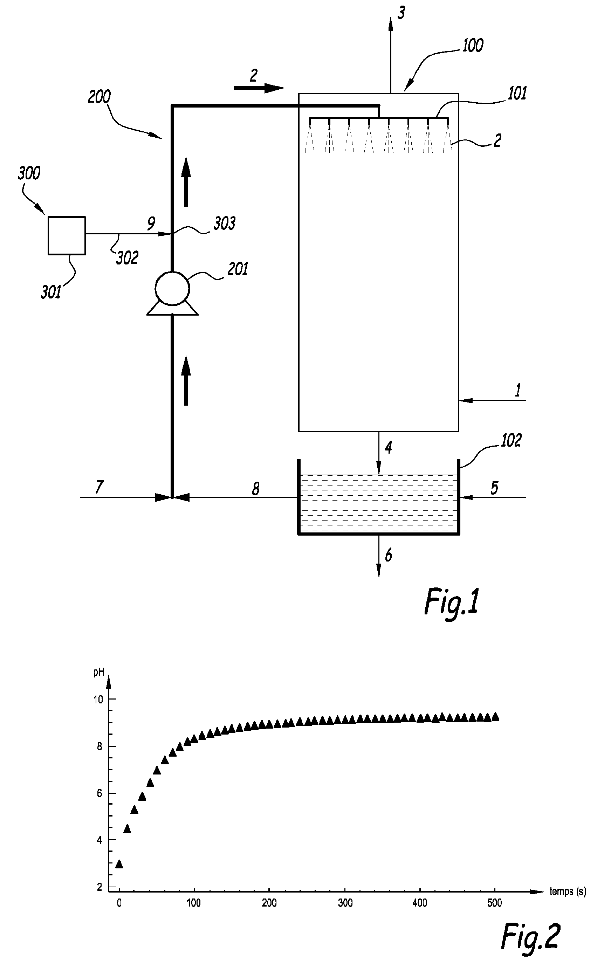

Sur la figure 1, un moteur, en particulier diesel, d'un bateau émet des gaz d'échappement 1 qui sont envoyés à l'intérieur d'un laveur de désulfurisation 100, c'est-à-dire un laveur conçu pour capter le dioxyde de soufre (SO₂) contenu dans les gaz d'échappement 1, en lavant ces gaz à l'intérieur du laveur par un liquide de lavage 2. Le laveur 100 est embarqué sur le bateau précité. Les gaz épurés 3, sortant du laveur 100, sont rejetés à l'atmosphère, le cas échéant après avoir subi des traitements aval non limitatifs de l'invention.

Le laveur 100 relève d'une technologie connue en soi. Il s'agit par exemple d'un laveur à garnissage, d'un laveur à pulvérisation en pluie ou d'un laveur à plateaux. Dans tous les cas, pour répandre le liquide de lavage 2 à l'intérieur du laveur 100 afin d'y laver les gaz à épurer 1, le laveur est équipé d'éléments 101 de dispersion du liquide de lavage 2. Ces éléments de dispersion 101 sont généralement situés en tête du laveur 100, par exemple au-dessus du garnissage lorsque le laveur inclut un tel garnissage. A titre d'exemples non limitatifs, les éléments de dispersion 101 sont des buses de pulvérisation, des rampes d'écoulement et/ou des têtes de projection.

Les effluents 4 du laveur 100, c'est-à-dire les eaux ayant captées le dioxyde de soufre lors de leur passage à l'intérieur du laveur après y avoir été répandues, sont collectés dans un bac 102. Suivant une disposition optionnelle, le bac de collecte 102 est alimenté par un flux d'air 5 qui est admis, notamment injecté, directement dans les effluents 4 collectés : ce flux d'air 5 permet de promouvoir l'oxydation du soufre, en favorisant le passage des sulfites aux sulfates. En pratique, le bac de collecte 102 est soit intégré au fond du laveur 100, soit déporté voire séparé du laveur 100, sous forme d'un bac annexe. Dans tous les cas, une évacuation 6 du bac de collecte 102 assure le rejet régulier des effluents collectés, le cas échéant après que ces derniers aient subit des traitements aval, cette évacuation 6 permettant ainsi une purge de déconcentration vis-à-vis du laveur 100.

Le liquide de lavage 2 alimentant les éléments de dispersion 101 est constitué en quasi-totalité d'eau, cette dernière étant soit de l'eau de mer ou de l'eau douce, prélevée dans la mer, le fjord, l'estuaire, le bassin, etc., dans lequel le bateau navigue ou mouille, soit des effluents du laveur 100, recyclés depuis le bas de ce dernier. Une canalisation 200 assure la circulation du liquide de lavage 2 jusqu'aux éléments de dispersion 101. En pratique, cette canalisation 200 comprend une ou plusieurs conduites pour acheminer le liquide de lavage. Quelle que soit la forme de réalisation de la canalisation 200, la sortie de cette dernière est raccordée aux éléments de dispersion 101, tandis que son entrée est reliée, à la fois, à une arrivée d'eau fraîche 7, typiquement de l'eau de mer ou de l'eau douce environnant le navire, et au bac de collecte 102 par un recyclage 8. En service, l'alimentation de la canalisation 200 dépend de la configuration de fonctionnement de l'installation :
- lorsque l'installation fonctionne en boucle ouverte, le recyclage 8 présente un flux nul, de sorte que le liquide entrant dans la canalisation 200 est intégralement constitué d'eau fraîche provenant de l'arrivée d'eau 7 ;
- lorsque l'installation fonctionne en boucle fermée, le liquide entrant dans la canalisation 200 est quasi totalement constitué d'effluents du laveur 100, provenant directement du bac de collecte 102 via le recyclage 8, le flux de l'arrivée d'eau fraîche 7 étant marginal en ne servant que d'appoint pour compenser les purges de déconcentration, rejetées par l'évacuation 6, ainsi que pour compenser une évaporation nette possible.

Bien entendu, l'installation peut fonctionner en boucle semi-fermée, dans le sens où le liquide entrant dans la canalisation 200 présente des parts, respectivement pour le flux provenant de l'arrivée d'eau fraîche 7 et pour le flux du recyclage 8, qui sont substantielles. En pratique, des vannes, non représentées sur la figure 1, permettent de commander ces deux flux selon la configuration de fonctionnement souhaitée.

Dans tous les cas, le liquide entrant dans la canalisation 200 est entraînée jusqu'à la sortie de celle-ci par une pompe 201 dont est équipée la canalisation. Cette pompe 201 relève d'une technologie connue en soi, sa forme de réalisation n'étant pas limitative.

Dans les situations de fonctionnement où l'alcalinité naturelle apportée par l'arrivée d'eau 7 ne suffit pas, que ce soit parce que le bateau vogue dans de l'eau douce d'un estuaire ou d'un fjord, ou bien parce que la part du flux provenant de cette arrivée 7 est trop faible en entrée de la canalisation 200 par rapport au flux du recyclage 8, un réactif basique doit être ajouté dans le liquide de lavage 2 : ce réactif basique apporte un complément d'alcalinité nécessaire à la neutralisation de l'acidité apportée par le dioxyde de soufre à capter dans le laveur 100. Selon une caractéristique essentielle de l'invention, ce réactif basique est constitué d'un lait de magnésie, c'est-à-dire d'une suspension de magnésie (Mg(OH)₂) dans l'eau. Pour ce faire, du lait de magnésie concentré, ayant notamment une concentration comprise entre 30 et 60 % en poids, est mis à disposition sous forme d'une source 301 et le lait de magnésie de cette source 301 est ajouté au liquide de lavage 2, sous forme d'un flux 9, dans la canalisation 200. En pratique, une conduite 302, commandée par une vanne non représentée sur la figure 1, relie directement la source 301 à la canalisation 200, cette conduite 302 et la source 301 appartenant ainsi à un système 300 permettant d'ajouter du lait de magnésie au liquide de lavage 2. Le point 303 de branchement de la conduite 302 sur la canalisation 200, autrement dit, plus généralement, le point d'introduction du lait de magnésie à l'intérieur de la canalisation 200 est situé entre l'entrée et la sortie de cette canalisation. Dans l'exemple de réalisation considéré sur la figure 1, ce point d'introduction 303 est en aval de la pompe 201, étant toutefois remarqué que, à titre de variante non représentée, le point d'introduction peut être prévu en amont de la pompe. Dans tous les cas, on comprend que, en amont du point d'introduction 303, le liquide de lavage circulant dans la canalisation 200 est constitué en totalité du flux de l'arrivée d'eau 7 et/ou du flux du recyclage 8, tandis que, en aval du point d'introduction 303, le liquide de lavage est constitué du mélange entre le liquide circulant dans la canalisation en amont du point 303 et le lait de magnésie du flux 9.

Comparativement à la soude et à la chaux, l'utilisation du lait de magnésie pour le flux de réactif basique 9 est avantageuse. Le tableau reproduit ci-dessous a été établi pour un cas d'exemple dans lequel un flux de 140 000 Nm³/h de gaz à épurer 1 contenant 320 kg/h de dioxyde de soufre est lavé, en opérant à 35°C, avec 1000 m³/h d'eau de mer pulvérisée, ayant une alcalinité de 1000 µmol/l.

| | A | B | C |
|---|---|---|---|
| réactif alcalin ajouté | aucun | soude (NaOH) | lait de magnésie (Mg(OH)₂) |
| pH en tête du laveur | ~ 8 | ~ 10,4 | ~ 9 |

Lorsqu'on opère sans ajout d'un réactif basique (colonne A du tableau), le rendement d'épuration des gaz 1 n'est que de 80% environ, ce qui est insuffisant pour satisfaire aux exigences généralement imposées. Aussi, pour satisfaire à une exigence de 97% de rendement d'épuration, on opère en ajoutant de la soude au liquide de lavage envoyé aux éléments de dispersion 101 (colonne B du tableau) : le pH du mélange entre l'eau de mer et la soude, répandu à l'intérieur du laveur 100, monte alors à 10,4 environ en tête du laveur, c'est-à-dire en sortie des éléments de dispersion. Bien que le pH chute ensuite rapidement en descendant dans le laveur, une valeur de pH si élevée au niveau des éléments de dispersion 101 induit des risques de précipitation de sels, tels que des sulfites de sodium et des sulfates de calcium, qui ont tendance à boucher les éléments de dispersion 101 et à encroûter le reste du laveur 100.

Ainsi, le cas de la colonne A conduit à un rendement d'épuration inacceptable tandis que le cas de la colonne B satisfait le rendement d'épuration mais risque d'affecter l'efficacité du laveur 100 du fait de son encroûtage. On notera que l'utilisation de chaux en place de la soude aboutit à un cas similaire à celui de la soude en ce qui concerne le pH et crée encore plus de précipitation de sels au niveau des éléments de dispersion 101.

En revanche, en opérant avec du lait de magnésie pour le réactif basique du flux 9 (colonne C du tableau ci-dessus), le rendement d'épuration reste satisfait comme dans le cas de la chaux et de la soude, sans pour autant altérer l'efficacité du lavage des gaz 1, voire en renforçant l'efficacité du laveur. En effet, le pH du liquide de lavage obtenu, au niveau des éléments de dispersion 101, est de l'ordre de 9, ce qui réduit le risque de précipitation de sels. En particulier, comparativement aux sulfites et hydrogénosulfites de sodium, les sulfites et hydrogénosulfites de magnésium sont beaucoup plus solubles. Un autre avantage apporté par le lait de magnésie est que la magnésie est peu soluble dans l'eau et sa dissolution est lente, comparativement à la soude et à la chaux : le profil de pH dans le laveur 100 chute moins rapidement et une zone alcaline existe plus longtemps à l'intérieur du laveur. En d'autres termes, l'alcalinité apportée par le lait de magnésie est relâchée plus lentement, au cours du cheminement vers le bas du liquide de lavage 2 répandu dans le laveur, depuis les éléments de dispersion 101. Dans la mesure où une telle zone alcaline est plus favorable à la captation du dioxyde de soufre qu'une zone acide, une telle zone acide s'établissant très vite avec de la soude ou de la chaux, l'efficacité du laveur 100 est augmentée, toutes choses étant égales par ailleurs. D'autre part, la nécessaire oxydation des sulfites en sulfates est améliorée par la persistance de cette zone alcaline car le rendement de la réaction d'oxydation est fortement dépendante du pH et décroît rapidement avec lui.

Dans la mesure où la cinétique de dissolution de la magnésie joue un rôle important pour la mise en oeuvre de l'invention, une caractéristique essentielle de cette dernière est que le temps mis par le lait de magnésie pour passer de son point d'ajout au liquide de lavage 2, jusqu'à sa dispersion dans le laveur, doit rester maîtrisé. Ainsi, le temps de passage du lait de magnésie depuis le point d'introduction 303 jusqu'aux éléments de dispersion 101 est compris entre 0,5 et 20 secondes. En pratique, ce temps de passage peut être défini comme la longueur de tuyauterie existante entre le point d'introduction 303 et les éléments de dispersion 101, divisée par la vitesse du liquide de lavage 2 dans la canalisation 200 en aval du point 303 : à titre d'exemple, lorsque le liquide de lavage 2 circule dans la canalisation 200 à une vitesse de 2 m/s, la longueur de la canalisation 200 entre le point 303 et les éléments 101 vaut environ entre 1 et 40 m.

Pour bien comprendre cet aspect de l'invention, on a réalisé un essai dans lequel de l'eau de mer a été acidifiée à un pH de 3 avec de l'acide sulfurique, ce qui représente la situation d'acidité du liquide de lavage 2 en bas du laveur 100, c'est-à-dire après que l'eau de mer ait dissous le dioxyde de soufre et que ce dernier ait été oxydé. Du lait de magnésie, ayant une concentration de 40% en poids, est ajouté à cette eau de mer acidifiée, et ce très rapidement et sous forte agitation. Le pH du mélange obtenu est mesuré avec une sonde de pH, ce qui donne le graphique de la figure 2 : la montée du pH en fonction du temps est représentative de la vitesse de dissolution de la magnésie apportée par le lait de magnésie, au contact de l'eau de mer acide, comme c'est le cas dans le laveur 100.

Ainsi, la cinétique de dissolution de la magnésie dans de l'eau de mer acidifiée, telle qu'illustrée par la figure 2, est favorable à l'étagement du pH au sein du laveur 100, dans le sens où la magnésie apportée par le lait de magnésie se dissout graduellement au fur et à mesure que le liquide de lavage 2 chemine depuis le haut du laveur vers le bas de ce dernier, puis séjourne dans le bac de collecte 5. Dès lors, on comprend que :
- si le lait de magnésie est injecté trop tard dans le liquide de lavage 2, c'est-à-dire à moins de 0,5 seconde des éléments de dispersion 101 au niveau desquels le liquide de lavage entre en contact avec les fumées 1 à l'intérieur du laveur 100, le lait de magnésie n'a pas le temps de se dissoudre assez, si bien que la capacité de neutralisation en haut du laveur 100 sera insuffisante ; et
- inversement, si le lait de magnésie est introduit trop en amont, c'est-à-dire à plus de 30 secondes des éléments de dispersion 101, trop de lait de magnésie a le temps de se dissoudre dans le liquide de lavage 2 avant d'atteindre les éléments de dispersion 101, si bien que le pH du liquide de lavage 2 devient trop élevé avant d'atteindre les éléments de dispersion 101, ce qui induit des risques de précipitations et de carbonatation tant au niveau des éléments de dispersion eux-mêmes qu'à l'intérieur du haut du laveur 100.

Par ailleurs, on notera qu'en étant introduit dans le liquide de lavage 2 en amont des éléments de dispersion 101, le lait de magnésie du flux ajouté 9 se mélange efficacement au reste du liquide de lavage, la suspension de magnésie se répartissant de manière homogène dans le liquide de lavage en aval du point d'introduction 303. De même, introduire le lait de magnésie dans la canalisation 200, et donc en aval du bac de collecte 102, présente un réel intérêt technique, tout en allant à l'encontre des pratiques habituelles du domaine. En effet, en introduisant le réactif basique dans la canalisation 200 et non dans le bas de collecte 102, on évite la dilution de ce réactif dans un grand volume, ainsi qu'une perte d'une fraction de ce réactif par l'évacuation 6. D'autre part, lorsque l'installation fonctionne en boucle fermée ou semi-fermée, la soude ou la chaux est usuellement introduite directement dans le bac de collecte 102, en dosant cet apport par mesure du pH dans le bac ou bien en asservissant le flux de ce réactif basique à une valeur de dioxyde de soufre résiduel dans les gaz épurés 3. Or les effluents 4 collectés dans le bac 102 contiennent un mélange partiellement constitué de sulfites, d'hydrogénosulfites et de sulfates, dont l'oxydation est avantageusement prévue dans le bac 102 : en introduisant le réactif alcalin directement dans le bac de collecte 102, une partie de ce réactif sert à corriger l'excédent d'acidité que l'homme du métier sait être généré par cette oxydation, l'acide sulfurique produit par oxydation étant plus fort que l'acide sulfureux.

Ainsi, l'invention combine astucieusement l'utilisation de lait de magnésie et l'introduction de ce réactif basique à la fois en aval du bac de collecte 102 et en amont des éléments de dispersion 101, avec un temps de passage maîtrisé pour rejoindre ces éléments de dispersion. A l'inverse, l'introduction de magnésie directement dans le bac de collecte 102 induirait à la fin une utilisation excessive de réactif, en raison des pertes dues à l'oxydation dans ce bac et à l'évacuation, notamment aux purges, du contenu de ce bac, tandis que l'utilisation d'un autre réactif comme la chaux ou la soude conduirait à un profil de pH à la fois trop élevé en tête du laveur 100 et chutant trop rapidement en descendant dans le laveur. Autrement dit, en ajoutant le lait de magnésie dans le liquide de lavage 2 via le point d'introduction 303 de la canalisation 200, et non par le bac de collecte 102 qui présente typiquement un temps de séjour de l'ordre d'une minute, l'invention tire profit du fait que la dissolution de la magnésie intervient à l'intérieur du laveur, c'est-à-dire à l'endroit où on en a le plus besoin, en y créant un profil de pH favorable.

## Revendications

1. Installation d'épuration des gaz d'échappement d'un moteur d'un navire marin, laquelle installation comprend :
- un laveur de désulfuration (100), à l'intérieur duquel des gaz à épurer (1) sont envoyés et qui est pourvu d'éléments (101) de dispersion d'un liquide (2) de lavage de ces gaz, qui sont adaptés pour répandre le liquide de lavage à l'intérieur du laveur,
- un bac (102) de collecte des effluents (4) du laveur (100) ; et
- des moyens (200, 300) d'alimentation des éléments de dispersion (101) en liquide de lavage (2), ces moyens d'alimentation comprenant :
- une canalisation (200) de circulation du liquide de lavage, dont la sortie est raccordée aux éléments de dispersion, dont l'entrée est reliée à une arrivée d'eau (7) et/ou au bac de collecte (102), et qui est pourvue d'une pompe (201) d'entrainement du liquide de lavage vers les éléments de dispersion, et
- un système (300) d'ajout de lait de magnésie (9) au liquide de lavage (2), qui inclut une source de lait de magnésie (301) et qui est adapté pour introduire le lait de magnésie provenant de cette source dans la canalisation (200) en un point d'introduction (303) situé entre l'entrée et la sortie de la canalisation,
**caractérisée en ce que** la canalisation (200) est conçue pour que le temps de passage du lait de magnésie (9) depuis le point d'introduction (303) jusqu'aux éléments de dispersion (101) soit compris entre 0,5 et 20 secondes.

2. Installation suivant la revendication 1, **caractérisée en ce que** la source de lait de magnésie (301) est constituée d'une suspension aqueuse de magnésie (Mg(OH)₂), ayant une concentration de 30 à 60 % en poids.

3. Installation suivant l'une des revendications 1 ou 2, **caractérisée en ce que** le point d'introduction (303) est aval de la pompe (201) de la canalisation (200).

4. Installation suivant l'une des revendications 1 ou 2, **caractérisée en ce que** le point d'introduction (303) est amont de la pompe de la canalisation.

5. Installation suivant l'une quelconque des revendications précédentes, **caractérisée en ce que** le bac de collecte (102) est adapté pour y admettre un flux d'air (5).

6. Procédé d'épuration des gaz d'échappement d'un moteur d'un navire marin, dans lequel :
- des gaz à épurer (1) sont envoyés à l'intérieur d'un laveur de désulfuration (100),
- un liquide (2) de lavage des gaz à épurer (1) est répandu à l'intérieur du laveur par des éléments de dispersion (101),
- les effluents (4) du laveur (100) sont collectés dans un bac de collecte (102), et
- le liquide de lavage (2) circule dans une canalisation (200), dont la sortie est raccordée aux éléments de dispersion (101) pour les alimenter en liquide de lavage et dont l'entrée est alimentée par de l'eau (7) et/ou par le bac de collecte (102), du lait de magnésie (9) étant ajouté au liquide de lavage (2) en étant introduit dans la canalisation (200) en un point d'introduction (303) situé entre l'entrée et la sortie de la canalisation, **caractérisé en ce que** le liquide de lavage (2) est entrainé dans la canalisation (200) jusqu'aux éléments de dispersion (101) de sorte que le temps de passage du lait de magnésie (9) depuis le point d'introduction (303) jusqu'aux éléments de dispersion soit compris entre 0,5 et 20 secondes.

7. Procédé suivant la revendication 6, dans lequel le lait de magnésie (9), qui est ajouté au liquide de lavage (2), est constitué d'une suspension aqueuse de magnésie (Mg(OH)₂), ayant une concentration de 30 à 60% en poids.

8. Procédé suivant l'une des revendications 6 ou 7, dans lequel un flux d'air (5) est admis dans le bac de collecte (102).
